# FASCICULE DE BREVET EUROPEEN

(11) **EP 3 878 025 B1**
(45) Date de publication et mention de la délivrance du brevet: **07.06.2023**
(21) Numéro de dépôt: 19786604.9
(22) Date de dépôt: 17.10.2019
(51) Int. Cl.: H01M 50/20, B60R 16/04, B60L 50/64, H01M 50/249

(54) **DISPOSITIF DE SUPPORT DE BATTERIE POUR VÉHICULE AUTOMOBILE**
STÜTZVORRICHTUNG FÜR KRAFTFAHRZEUGBATTERIE
MOTOR VEHICLE BATTERY SUPPORT DEVICE

(30) Priorité: 09.11.2018 FR 1871435
(43) Date de publication de la demande: 15.09.2021
(73) Titulaire: Renault s.a.s, 92100 Boulogne Billancourt (FR)
(72) Inventeur: GHIRARDINI, Armand, 78430 LOUVECIENNES (FR); PAROLINI, Pascal, 95720 Le Mesnil Aubry (FR); GUIGNARD, Fabrice, 78280 GUYANCOURT (FR)
(74) Mandataire: Renault Group
(86) Numéro de dépôt international: PCT/EP2019/078243
(87) Numéro de publication internationale: WO 2020/094359

(56) Documents cités:
- FR-A1- 2 778 884
- FR-A1- 2 843 340
- FR-A1- 3 045 533

## Description

L'invention a trait à un dispositif de support de batterie pour un véhicule automobile, notamment véhicule automobile comprenant un moteur à combustion interne, électrique ou hybride. L'invention concerne également un véhicule automobile comportant un tel dispositif.

Les véhicules automobiles sont équipés de manière générale d'une ou de plusieurs batteries de toutes tailles pour répondre aux besoins électriques des véhicules.

A titre d'exemple, une batterie est disposée dans le compartiment moteur du véhicule, notamment, dans le fond dudit compartiment. Ladite batterie sert à démarrer le moteur lors de son démarrage et être alimentée par ce dernier lors de son fonctionnement pour distribuer l'énergie vers des options annexes, via des câbles d'alimentation électrique. En outre, des boîtiers de fusibles et de relais sont reliés à la batterie pour protéger l'ensemble du circuit électrique.

De manière connue, pour répondre à une contrainte d'espace et d'encombrement dans le compartiment moteur, la batterie, les boîtiers de fusibles et de relais, les câbles d'alimentation électrique sont agencés le plus proche possible les uns des autres de manière à former un bloc compact.

De plus, un filtre à air fait peut faire partie de ce bloc en étant notamment fixé à un dispositif de support de batterie, souvent en porte-à-faux, pour la même raison d'espace restreint dans le compartiment moteur. Le dispositif de support de batterie peut être un simple bac de support.

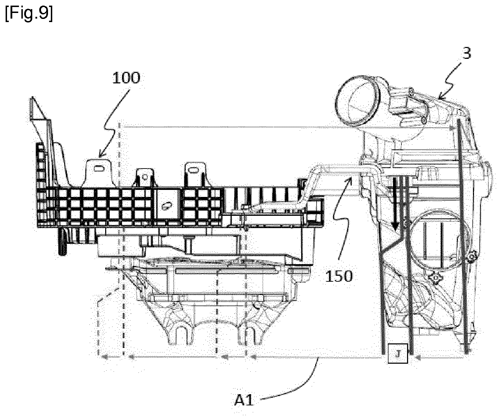

La figure 9 illustre un agencement existant d'un filtre à air 3 avec un bac de support 100 de batterie. Dans cet exemple, le filtre à air 3 est relié au bac de support 100 par l'intermédiaire d'un moyen de fixation. Ici, le moyen de fixation 150 est une patte de fixation allongée qui est fixée d'une part à un fond du bac de support 100 et d'autre part au filtre à air 3.

Toutefois, la forme allongée de la patte de fixation ne garantit pas un bon maintien et un positionnement correct du filtre à air.

En effet, le filtre à air étant maintenu en porte-à-faux, le poids du filtre à air exerce un effort sur la patte de fixation.

Ainsi, par le principe du bras de levier, l'effort induit par le poids du filtre à air peut faire fléchir la patte de fixation. Plus le filtre à air est proche d'une extrémité de la patte de fixation, plus la flexion est importante. A cause de cette flexion, la position du filtre à air n'est pas stable.

De plus, il peut arriver que l'effort exercé par le filtre à air sur la patte de fixation soit trop important et engendre ainsi la cassure de la patte. La fixation du filtre à air au bac de support de batterie n'est donc plus assurée.

Un but de la présente invention est de répondre aux inconvénients de l'art antérieur mentionné ci-dessus et en particulier, de proposer une fixation rigide et stable du filtre à air au bac de support de batterie tout en permettant un agencement compact de ces deux éléments.

Pour cela, un premier aspect de l'invention concerne un dispositif de support de batterie pour véhicule automobile, comprenant un bac de support destiné à recevoir une batterie. Ledit bac comprend un fond et au moins une paroi s'étendant verticalement à partir du fond.

Selon l'invention, le dispositif comprend une goulotte s'étendant, selon une direction horizontale, à partir d'un bord périphérique du fond et comprenant un moyen de fixation avec un filtre à air. En outre, le dispositif de support comprend une pièce de soutien logée dans la goulotte et fixée d'une part à ladite goulotte, et d'autre part à l'au moins une paroi du bac.

La solution proposée permet de résoudre les problèmes précités. En particulier, l'ensemble de la goulotte et de la pièce de soutien présente une rigidité plus élevée que celui d'une patte de fixation seule de l'exemple cité précédemment. Le poids dudit ensemble permet donc de mieux compenser le poids du filtre à air. Ainsi, l'effort exercé par le filtre à air sur la goulotte est inférieur à l'effort exercé par le filtre à air sur la patte de fixation. Il y a donc moins de risque de cassure de la goulotte ou de la pièce de soutien. La fixation entre le filtre à air et le dispositif de support est solide.

Par ailleurs, la fixation de la pièce de soutien à au moins une des parois du bac de support et à la goulotte permet de mieux porter le filtre à air. En effet, l'effort induit par le filtre est repris d'une part par la pièce de soutien et d'autre part par la goulotte intégrant au dispositif de support et rigidifiée en présence de la pièce de soutien.

Ainsi, le filtre à air est tenu fixé fermement au dispositif de support sans oscillations, et ce malgré la position en porte-à-faux dudit filtre. En outre, le filtre à air fixé au dispositif de support forme un bloc compact qui peut être facilement installé dans un espace restreint du compartiment moteur.

Le dispositif de support selon l'invention peut optionnellement comprendre une ou plusieurs des caractéristiques suivantes :
- le point de fixation de la pièce de soutien à la goulotte est situé à proximité du moyen de fixation avec le filtre à air ; ainsi, l'effort induit par le poids du filtre air sur la goulotte est repris rapidement et efficacement par la pièce de soutien et par la goulotte ;
- la pièce de soutien comprend un renfort disposé à proximité du moyen de fixation avec le filtre à air ; ainsi, le renfort permet d'absorber plus de l'effort induit par le filtre à air et donc d'augmenter la rigidité de l'ensemble de la goulotte et de la pièce de soutien ;
- la goulotte est venue de matière avec le bac de support ; ainsi, le filtre à air est fixé directement au bac de support ; le moyen de fixation de filtre à air est en quelque sorte intégré au bac de support, ce qui permet de réduire le nombre d'éléments constitutifs du dispositif de support et donc de simplifier le montage du filtre à air au dispositif de support ;
- une première paroi s'étend verticalement à partir d'un premier bord périphérique du fond ;
- selon l'alinéa précédent, la goulotte s'étend, selon la direction horizontale, également à partir dudit premier bord périphérique;
- selon les deux alinéas précédents, la pièce de soutien comprend une paroi externe et une paroi interne délimitant un espace recevant ladite première paroi de manière à fixer la pièce de soutien à la première paroi ; en d'autres termes, la pièce de soutien est fixée au bac de support, par l'engagement de la première paroi dans une rainure délimitée par les parois externes et internes de la pièce de soutien ; la pièce de soutien est ainsi fixée le long de la première paroi ; il s'agit donc une liaison solide entre la pièce de soutien et la première paroi, ce qui permet de mieux supporter l'effort induit par le filtre à air ;
- la première paroi comprend une portion concave agencée de manière à laisser à découvert un puits de vis;
- selon l'alinéa précédent, la paroi externe et la paroi interne de la pièce de soutien comprennent chacune une portion concave correspondante située en face de la portion concave de la première paroi ; en d'autres termes, la rainure délimitée par les parois externe et interne de la pièce de soutien a une forme complémentaire à celle de la première paroi ; cela permet un engagement parfait de la première paroi dans la rainure et donc une liaison solide entre la pièce de soutien et la première paroi ;
- la pièce de soutien est fixée à une deuxième paroi sécante à ladite première paroi ; à titre d'exemple, la pièce de soutien est à la fois fixée à la première paroi comme présentée précédemment et à la deuxième paroi par un autre mode de fixation ; ainsi, la pièce de soutien est fixée à deux endroits différents du bac de support, ce qui renforce davantage la fixation entre ces deux éléments en vue de mieux supporter l'effort induit par le filtre à air ;
- selon l'alinéa précédent, la pièce de soutien est fixée à la deuxième paroi par vissage ; il s'agit donc un moyen de fixation simple et rapide à réaliser ;
- de manière optionnelle, la pièce de soutien comprend un bouchon de protection d'un puits de vis du support de batterie ;
- la pièce de soutien comprend une paroi interne s'étendant parallèlement à la première paroi, une fente, destinée à recevoir un tuyau de dégazage, étant installée sur ladite paroi interne ;
- la pièce de soutien comprend un corps creux comprenant une ouverture et des moyens de fixation de câbles installés dans ledit corps creux ;
- la pièce de soutien comprend une paroi supérieure et des moyens de coopération, destinés à recevoir un boîtier de fusible et relais et fixés sur la paroi supérieure.

L'invention a également pour objet un ensemble pour la fixation et l'agencement de batterie dans un compartiment de véhicule automobile. Selon l'invention, cet ensemble comprend un dispositif de support de batterie selon l'invention, une batterie, et un filtre à air.

L'invention a également pour objet un véhicule automobile qui comprend un dispositif de support de batterie selon l'invention ou un ensemble selon l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[Fig. 1] représente une vue de face d'un dispositif de support selon l'invention, ledit dispositif recevant une batterie et étant relié à un filtre à air;
[Fig. 2] représente une vue en perspective montrant une face avant du dispositif de support de la figure 1;
[Fig.3] représente une vue en perspective montrant l'arrière d'une première partie du dispositif de support de la figure 1, ladite première partie comprenant un fond, un pourtour s'étendant verticalement à partir du fond et une goulotte ;
[Fig. 4] représente une vue en perspective montrant le dessous d'une deuxième partie du dispositif de support de la figure 1, ladite deuxième partie étant constituée d'une pièce de soutien logée dans la goulotte de la figure 3 ;
[Fig. 5] représente une vue d'en haut du dispositif de support auquel est fixé le filtre à air ;
[Fig. 6] représente une vue en perspective et une vue latérale de la pièce de soutien et d'un tuyau de dégazage monté sur ladite pièce ;
[Fig. 7] représente une vue perspective et une vue d'en haut de la pièce de soutien comprenant des moyens de fixation avec un boîtier de fusibles et de relais;
[Fig. 8] représente une vue en perspective du dispositif de support de la figure 1 avec la batterie et un boîtier de fusibles et de relais monté sur la pièce de soutien ;
[Fig. 9] illustre un agencement existant d'un filtre à air 3 avec un bac de support 100 de batterie.

Les éléments structurellement et fonctionnellement identiques, présents dans plusieurs figures distinctes, sont affectés d'une seule et même référence numérique ou alphanumérique.

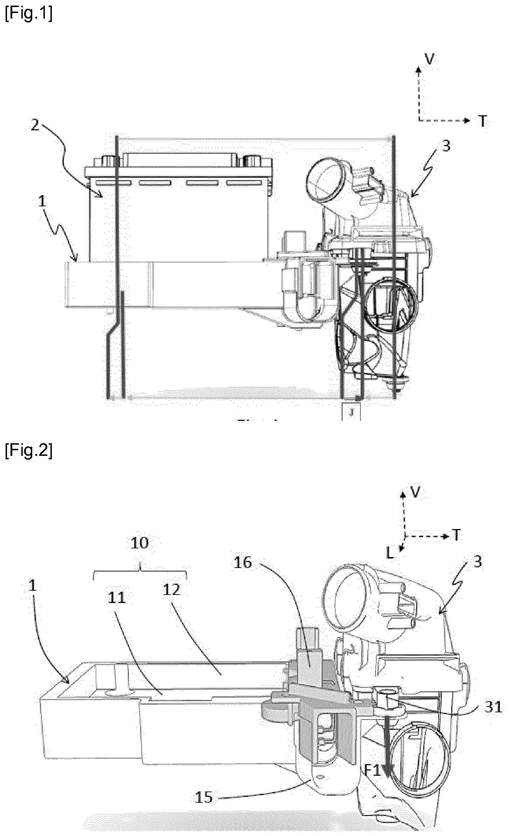

Dans la suite de la description, on adoptera une direction verticale représentée par l'axe V, une direction transversale horizontale ou latérale horizontale représentée par l'axe T et une direction longitudinale horizontale représentée par l'axe L. Ces trois axes sont illustrés sur les figures 1 à 8.

En référence aux figures 1 à 3, un dispositif de support 1 reçoit une batterie 2. Cette dernière peut être notamment fixée au dispositif de support 1. Un filtre à air 3 est fixé à un côté du dispositif de support, ici, par vissage.

Selon l'invention et comme dans cet exemple, le dispositif de support 1 comprend un fond 11 sur lequel est reposée la batterie 2, et plusieurs parois s'étendant verticalement à partir du fond 11. Les parois verticales forment un pourtour 12 entourant une partie inférieure de la batterie 122.

Pour faciliter la compréhension de l'invention, nous considérons que le fond 11 du bac de support est allongé suivant l'axe horizontal longitudinal L. Le fond 11 s'étend en largeur selon l'axe transversal horizontal T et qui est perpendiculaire à l'axe L. Les parois du pourtour 12 s'étendent depuis le fond 11 selon l'axe vertical V qui est perpendiculaire à l'axe horizontal longitudinal L ainsi qu'à l'axe transversal T de sorte que ces trois axes L, V, T forment un repère orthogonal direct tel qu'illustré sur les figures 1 à 8. Les termes « avant », « arrière », sont définis par rapport à l'axe longitudinal L, les termes « inférieur », « supérieur » sont définis par rapport à l'axe V et le terme « latéral » est défini par rapport à l'axe T.

Ici, le fond 11 et le pourtour 12 forme un bac de support 10.

Le dispositif de support 1 comprend en outre une goulotte 15 s'étendent horizontalement à partir d'un premier bord périphérique du fond 11. Ici, le premier bord périphérique est un bord latéral 111 du fond 11.

Une plaque de fixation 151 est disposée à une première extrémité longitudinale 15a de la goulotte 15. La plaque de fixation 151 comprend, ici, un trou fileté 152 qui trouvera face à face d'un trou fileté porté par le filtre à air 3 lorsque ce dernier est attaché au dispositif de support 1. Une vis 31, illustrée sur la figure 2, traverse les deux trous et un boulon vient coopérer avec la vis 31 pour assurer le maintien du filtre à air 3 au dispositif de support 1.

Le poids du filtre à air 3, ainsi suspendu, exerce un effort au niveau de la vis 31 telle qu'illustrée par la flèche F1 sur la figure 2. Cet effort induit par le poids du filtre à air 3 est absorbé par l'ensemble de la goulotte 15 et d'une pièce de soutien 16 de manière à créer une fixation stable et solide du filtre à air 3 au dispositif de support 1.

Selon l'invention et comme dans cet exemple, la goulotte 15 et le bac de support 10 sont formés en une seule pièce. Autrement dit, le support de filtre à air, ici réalisé par la goulotte 15, est intégré au bac de support 10, ce qui permet de réduire le nombre de pièces distinctes de l'ensemble et l'incertitude dans le positionnement du filtre à air 3 par rapport au dispositif de support 1.

Grâce à l'intégration de la goulotte 15 au bac de support 10, le nombre de maillons de la chaîne de côte est réduit. En effet, comme observé sur la figure 9, le dispositif de support 100 de l'état de la technique comprend le support de filtre à air 150 distinct du bac de support. En conséquence, la chaîne de côte illustrée sur la figure 9 comprend au moins une côte en plus par rapport à la chaîne de côte illustrée sur la figure 1. La côte supplémentaire est représentée par le vecteur dénommé A1 de la figure 9.

Avec au moins un maillon en moins, la gestion de l'isostatisme de la zone entre la fixation du filtre à air 3 et la fixation du bac de support 10 à la structure de carrosserie est ainsi simplifiée.

Sur les figures 1 à 3, la pièce de soutien 16 est logée dans la goulotte 15. La pièce de soutien 16 est fixée à la goulotte 15 à un point de fixation disposé à côté du trou fileté 152. Le point de fixation comprend une ouverture 153 réalisée sur la plaque de fixation 151. L'ouverture 153 se trouvera en face d'une ouverture portée par la pièce de soutien 16. Un rivet passe au travers de ces ouvertures et assemble ainsi la pièce de soutien 16 et la goulotte15. Bien entendu, d'autres moyens d'assemblage peuvent être envisagés.

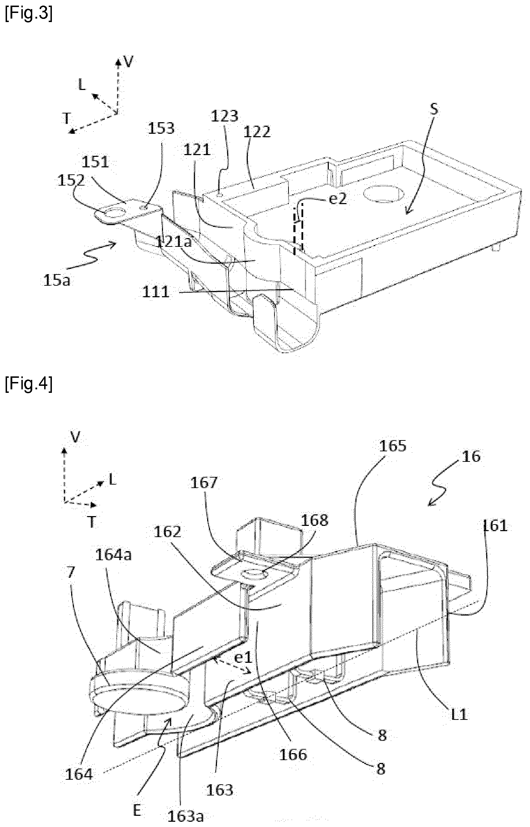

La figure 4 montre la structure de la pièce de soutien 16. Dans l'exemple illustré, la pièce de soutien 16 comprend un corps creux allongé présentant un profil en U inversé. La pièce de soutien 16, une fois montée de la goulotte 15, est considérée comme un couvercle qui ferme l'ouverture de la goulotte 15.

La pièce de soutien 16, agencée dans la goulotte 15, présente donc un premier côté latéral 161 qui s'oriente vers le filtre à air 3 et un deuxième côté latéral 162 qui s'oriente vers le bac de support 10.

La pièce de soutien 16 comprend également les moyens de fixations avec le bac de support 10, ou plus précisément avec le pourtour 12 du bac de support 10. Dans l'exemple illustré, ces moyens de fixation sont agencés tous du deuxième côté latéral 162.

Sur le deuxième côté latéral 162, la pièce de soutien 16 comprend une paroi primaire 163 et une paroi secondaire 164 s'étendant parallèlement l'une à l'autre et séparée latéralement l'une de l'autre par un espace E. Décrit autrement, la paroi primaire 163, la paroi secondaire 164 et une paroi supérieure 165 délimitent une rainure 166 ouverte en bas. L'espace E ou la rainure 166 reçoit une première paroi 121 qui s'étend verticalement à partir du premier bord périphérique 111 du fond 11.

Une fois que la première paroi 121 se loge dans l'espace E ou la rainure 166, les parois primaires et secondaires 163 et 164 se trouvent de part et d'autre de la première paroi 121. Précisément, la paroi primaire 163 se trouve à l'extérieur d'un espace S délimité par le fond 11 et le pourtour 12 tandis que la paroi secondaire 164 se trouve à l'intérieur de cet espace S. La paroi primaire 163 est encore appelée paroi externe 163 et la paroi secondaire 164 paroi interne.

Dans l'exemple illustré, la pièce de soutien 16 est agencée de manière à ce que l'espace E entre les parois primaires et secondaires 163, 164 présente une largeur e1 égale ou légèrement supérieure à la largeur e2 de la première paroi 121. De cette manière, la première paroi 121 et la rainure 166 s'emboîtent bien l'une dans l'autre pour d'une part maintenir fermement la pièce de soutien 16 en place dans la goulotte 15 et d'autre part éviter des déplacements latéraux de la pièce de soutien 16 par rapport au dispositif de support 1.

La pièce de soutien 16 comprend en outre une aile latérale 167 s'étendant perpendiculairement à un axe longitudinal L1 de ladite pièce. L'aile latérale 167 comportant un premier trou 168. L'aile latérale est agencée de manière à ce que lorsque la pièce de soutien 16 est introduite dans la goulotte, le premier trou 168 soit aligné axialement avec un deuxième trou 123 pratiqué sur une deuxième paroi 122 perpendiculaire à la première paroi 121. Un rivet ou une vis traverse les trous 168 et 123 pour fixer la pièce de soutien 16 à la deuxième paroi 122.

Ainsi, la pièce de soutien 16 comprend un premier moyen de fixation avec le pourtour 12, précisément avec la première paroi 121, constitué d'un espace E ou d'une rainure 166 délimité(e) par les parois primaires et secondaires 163, 164 et par la paroi supérieure 165.

La pièce de soutien 16 comprend en outre un deuxième moyen de fixation avec le pourtour 12, précisément avec la deuxième paroi 122, constitué d'un trou de fixation traversant 168.

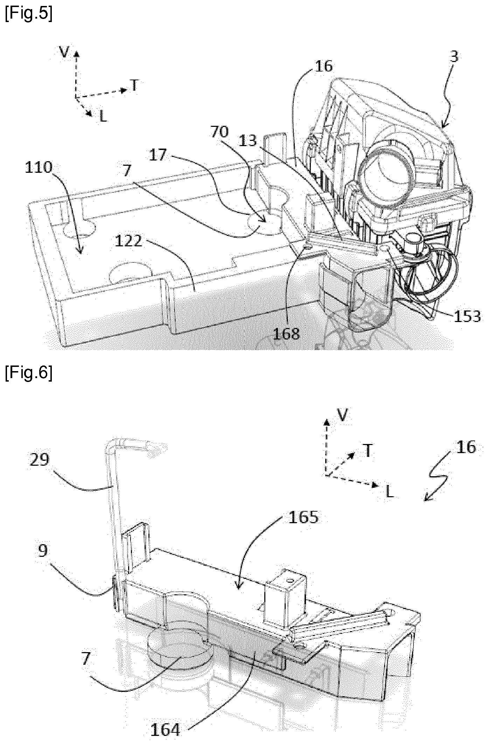

Sur la figure 5, un renfort 13 s'étend entre le trou 153 et le trou 168, c'est-à-dire entre le point de fixation de la pièce de soutien 16 avec la goulotte 15 et le point de fixation de la pièce de soutien avec la deuxième paroi 122. Ici, le renfort 13 est une barre amenant de la matière supplémentaire au voisinage des points de fixation de la pièce de soutien 16 avec la goulotte 15 et avec le bac de support 10 afin de rendre plus solide la fixation entre les éléments précités.

De manière optionnelle, la pièce de soutien 16 est conçue pour réaliser d'autres fonctions pratiques telles que la protection un puits de vis réalisé dans le fond 11 du bac de support 10, l'agencement des câbles d'alimentation électrique et d'un tuyau de dégazage, et le support pour un boîtier de fusibles et de relais. Ces fonctions seront détaillées ci-après dans la description.

Comme observé sur la figure 3, la première paroi 121 du pourtour 12 présente une portion convexe 121a vu de l'extérieur. Un tel profil particulier de la première paroi 121 est dû à la présence d'un puits de vis 17 au pied de ladite première paroi 121. On peut voir clairement l'emplacement du puits de vis 17 sur la figure 5.

Le puits de vis 17 est destiné à recevoir notamment des vis pour la fixation du bac de support 10 sur une structure de carrosserie de véhicule. Lorsqu'un choc du véhicule survient, il se peut que des fuites d'acide puissent avoir lieu dans le cas des batteries plomb-acide, ce qui entraîne un risque de corrosion des vis de fixation du bac de support et donc un risque de désolidarisation du bac de support avec la structure de carrosserie.

Afin de protéger des vis de fixation en cas de fuite d'acide, un bouchon de protection 7 est monté sur la pièce de soutien 16 de façon à se trouver face à face du puits de vis 17 lorsque ladite pièce de soutien est montée dans la goulotte 15.

Précisément, le bouchon de protection 7 est installé à une extrémité libre de la paroi secondaire 164 de la pièce de soutien 16. Plus précisément, le bouchon de protection 7 s'étend parallèlement au fond 11 du bac de support 10 à partir d'une extrémité libre d'une portion concave 164a de la paroi secondaire 164. En effet, les parois primaire et secondaire 163 et 164 de la pièce de soutien comprennent également des portions concaves respectives 163a et 164a pour s'adapter à la portion concave 121a de la première paroi 121.

Le bouchon de protection 7 présente une section circulaire dont le diamètre est égal ou légèrement inférieur au diamètre du puits de vis 17 pour être emmanché dans ledit puits 17 et pour recouvrir presque la totalité, voire la totalité de l'ouverture du puits. De plus, la hauteur de la paroi secondaire 164 de la pièce de soutien 16 est dimensionnée de manière à ce que lorsque la pièce de soutien 16 est montée sur le pourtour 12, la face supérieure 70 du bouchon de protection 7 affleure la face supérieure 110 du fond 11. Ainsi, la planéité du fond 11 est respectée, ce qui permet une pose stable de la batterie 2 sur le fond 11.

La pièce de soutien 16 peut également porter des câbles d'alimentation électrique servant par exemple à alimenter la boucle dynamique moteur. Comme observé sur la figure 4, l'espace proposé par le corps creux de la pièce de soutien 16 est exploité astucieusement comme un passage pour les câbles d'alimentation électrique. Des colliers de support 8 pour câbles sont installés dans l'espace du corps creux pour tenir le câblage. Ces colliers peuvent être de type auto-serrant.

Les câbles d'alimentation électrique, fixés à la pièce de soutien 16, se trouvent donc protégés en bas par la goulotte 15, en haut par la pièce de soutien 16 et sur le côté par les parois latérales de la pièce de soutien 16 et de la goulotte 15. Les câbles peuvent donc avoir un habillage fin, voire ne pas avoir d'habillage, ce qui permet de réduire les coûts de fabrication de ces câbles. Par ailleurs, la pièce de soutien 16 permet une indexation de câblage dans le compartiment moteur du véhicule.

De manière optionnelle, la pièce de soutien 16 propose un logement pour un tuyau de dégazage de la batterie. Comme illustré sur la figure 6, une fente 9 est réalisée sur la paroi secondaire 164. La fente 9, située à une extrémité arrière de la pièce de soutien 16, est agencée de manière à recevoir le tuyau de dégazage 29 de la batterie 2 et à le maintenir.

Selon une option de l'invention, la pièce de soutien 16 comprend des moyens de fixation et de positionnement d'un boîtier 4 de fusibles et de relais. Dans l'exemple illustré, les moyens de fixation et de positionnement sont constitués d'un îlot 41 et d'une plaque 42, ces deux éléments étant disposés face à face et s'étendant verticalement à partir de la face supérieure 165 de la pièce de soutien 16.

La distance d entre l'îlot 41 et la plaque 42 correspond ici à la longueur L du boîtier 4 de fusible et de relais. Par exemple, la distance d est légèrement supérieure à la longueur L2 du boîtier 4 de sorte que ledit boîtier puisse se poser entre l'îlot 41 et la plaque 42.

La plaque 42 a pour fonction de butée arrière empêchant le déplacement vers l'arrière du boîtier 4. Quant au l'îlot 42, il porte un moyen de fixation avec le boîtier 4, par exemple une fixation en queue d'aronde.

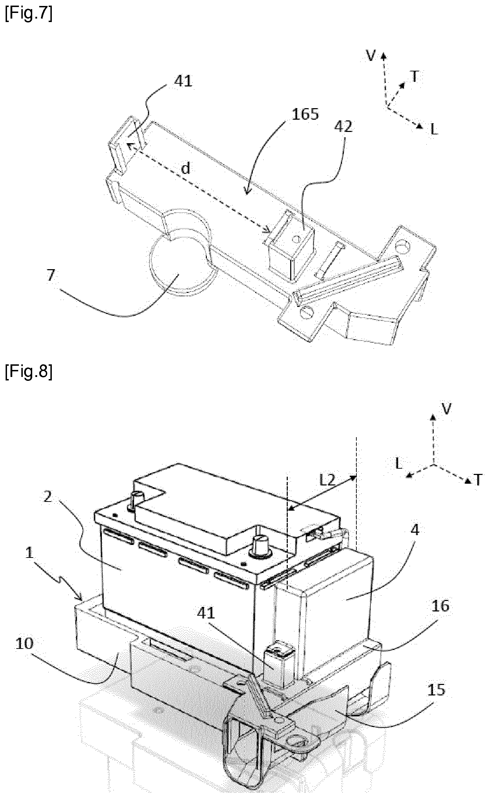

Comme illustré sur la figure 8, le boîtier 4 de fusibles et de relais, ainsi monté sur la pièce de soutien 16, est placé à proximité immédiate d'un côté latéral de la batterie 2. En d'autres termes, la batterie 2 et le boîtier 4 de fusibles et de relais, une fois montés sur le dispositif de support 1, forment un bloc compact et donc facile à s'installer dans un espace restreint d'un compartiment moteur.

Ainsi, selon la description ci-dessus, la pièce de soutien 16 réunit plusieurs fonctions en un seul élément. La pièce de soutien 16 peut être encore appelée une pièce multifonction permettant :
- la rigidification de la goulotte 15 qui supporte le filtre à air 3 ;
- la protection du puits de vis 7 ;
- l'intégration de la fonction de support du boîtier 4 de fusibles et de relais ;
- l'intégration de la fonction de fixation et d'indexation du tuyau de dégazage 29 de la batterie 2 ;
- l'intégration de la fonction de fixation des câbles d'alimentation électrique ; et
- la réduction du nombre de maillons de la chaîne de côte en intégrant plusieurs fonctions en une seule pièce.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de support (1) de batterie pour véhicule automobile, comprenant un bac de support (10) destiné à recevoir une batterie (2), ledit bac (10) comprenant un fond (11) et au moins une paroi (121, 122) s'étendant verticalement à partir du fond (11) ;
ledit dispositif (1) étant **caractérisé en ce qu'**il comprend :
- une goulotte (15) s'étendant, selon une direction horizontale, à partir d'un bord périphérique (111) du fond (11) et comprenant un moyen de fixation (152) avec un filtre à air (3); et
- une pièce de soutien (16) logée dans la goulotte (15) et fixée d'une part à ladite goulotte (15) et d'autre part à l'au moins une paroi (121, 122) du bac.

2. Dispositif (1) selon la revendication 1, **caractérisé en ce que** le point de fixation de la pièce de soutien (16) à la goulotte (15) est situé à proximité du moyen de fixation (152) avec le filtre à air (3).

3. Dispositif (1) selon la revendication 1 ou la revendication 2, **caractérisé en ce que** la pièce de soutien (16) comprend un renfort (13) disposé à proximité du moyen de fixation (152) avec le filtre à air (3).

4. Dispositif (1) selon l'une des revendications précédentes, **caractérisé en ce que** la goulotte (15) est venue de matière avec le bac de support (10).

5. Dispositif (1) selon l'une des revendications 1 à 3, **caractérisé en ce que** :
- une première paroi (121) s'étend verticalement à partir d'un premier bord périphérique (111) du fond (11) ;
- la goulotte (16) s'étend, selon la direction horizontale, également à partir dudit premier bord périphérique (111);
- la pièce de soutien (16) comprend une paroi externe (163) et une paroi interne (164) délimitant un espace (E) recevant ladite première paroi (121) de manière à fixer ladite pièce de soutien (16) à ladite première paroi (121).

6. Dispositif (1) selon la revendication 5, **caractérisé en ce que** :
- la première paroi (121) comprend une portion concave (121a) agencée de manière à laisser à découvert un puits de vis (7) ;
- la paroi externe (163) et la paroi interne (164) de la pièce de soutien (16) comprennent chacune une portion concave (163a, 164a) correspondante située en face de la portion concave (121a) de la première paroi (121).

7. Dispositif (1) selon l'une des revendications précédentes, **caractérisé en ce que** :
- une première paroi (121) s'étend verticalement à partir d'un premier bord périphérique (111) du fond (11) ;
- la goulotte (15) s'étend, selon la direction horizontale, également à partir dudit premier bord périphérique (111);
- la pièce de soutien (16) est fixée à une deuxième paroi (122) sécante à ladite première paroi (121).

8. Dispositif (1) selon la revendication 7, **caractérisé en ce que** la pièce de soutien (16) est fixée à la deuxième paroi (122) par vissage.

9. Ensemble pour la fixation et l'agencement de batterie dans un compartiment de véhicule automobile comprenant
- un dispositif (1) selon l'une des revendications précédentes ;
- une batterie (2) ; et
- un filtre à air (3).

10. Véhicule automobile **caractérisé en ce qu'**il comprend le dispositif selon l'une des revendications 1 à 8 ou l'ensemble selon la revendication 9.

## Patentansprüche

1. Stützvorrichtung (1) für eine Kraftfahrzeugbatterie, welche einen Stützkasten (10) umfasst, der dazu bestimmt ist, eine Batterie (2) aufzunehmen, wobei der Kasten (10) einen Boden (11) und mindestens eine Wand (121, 122), die sich vom Boden (11) aus vertikal erstreckt, umfasst,
wobei die Vorrichtung (1) **dadurch gekennzeichnet ist, dass** sie umfasst:
- eine Rinne (15), die sich in einer horizontalen Richtung von einem Umfangsrand (111) des Bodens (11) aus erstreckt und ein Befestigungsmittel (152) mit einem Luftfilter (3) umfasst; und
- ein Halteteil (16), das in der Rinne (15) aufgenommen ist und einerseits an der Rinne (15) und andererseits an der mindestens einen Wand (121, 122) des Kastens befestigt ist.

2. Vorrichtung (1) nach Anspruch 1, **dadurch gekennzeichnet, dass** sich der Punkt der Befestigung des Halteteils (16) an der Rinne (15) in der Nähe des Befestigungsmittels (152) mit dem Luftfilter (3) befindet.

3. Vorrichtung (1) nach Anspruch 1 oder Anspruch 2, **dadurch gekennzeichnet, dass** das Halteteil (16) eine Verstärkung (13) umfasst, die in der Nähe des Befestigungsmittels (152) mit dem Luftfilter (3) angeordnet ist.

4. Vorrichtung (1) nach einem der vorhergehenden Ansprüche, **dadurch gekennzeichnet, dass** die Rinne (15) stoffschlüssig mit dem Stützkasten (10) verbunden ist.

5. Vorrichtung (1) nach einem der Ansprüche 1 bis 3, **dadurch gekennzeichnet, dass**:
- eine erste Wand (121) sich von einem ersten Umfangsrand (111) des Bodens (11) aus vertikal erstreckt;
- die Rinne (16) sich in der horizontalen Richtung ebenfalls vom ersten Umfangsrand (111) aus erstreckt;
- das Halteteil (16) eine äußere Wand (163) und eine innere Wand (164) umfasst, die einen Zwischenraum (E) begrenzen, der die erste Wand (121) aufnimmt, um das Halteteil (16) an der ersten Wand (121) zu befestigen.

6. Vorrichtung (1) nach Anspruch 5, **dadurch gekennzeichnet, dass**:
- die erste Wand (121) einen konkaven Abschnitt (121a) umfasst, der so ausgebildet ist, dass er einen Schraubenschacht (7) unbedeckt lässt;
- die äußere Wand (163) und die innere Wand (164) des Halteteils (16) jeweils einen entsprechenden konkaven Abschnitt (163a, 164a) umfassen, der sich gegenüber dem konkaven Abschnitt (121a) der ersten Wand (121) befindet.

7. Vorrichtung (1) nach einem der vorhergehenden Ansprüche, **dadurch gekennzeichnet, dass**:
- eine erste Wand (121) sich von einem ersten Umfangsrand (111) des Bodens (11) aus vertikal erstreckt;
- die Rinne (15) sich in der horizontalen Richtung ebenfalls vom ersten Umfangsrand (111) aus erstreckt;
- das Halteteil (16) an einer zweiten Wand (122) befestigt ist, welche die erste Wand (121) schneidet.

8. Vorrichtung (1) nach Anspruch 7, **dadurch gekennzeichnet, dass** das Halteteil (16) an der zweiten Wand (122) durch Verschrauben befestigt ist.

9. Baueinheit zur Befestigung und Anordnung einer Batterie in einem Innenraum eines Kraftfahrzeugs, welche umfasst:
- eine Vorrichtung (1) nach einem der vorhergehenden Ansprüche;
- eine Batterie (2); und
- ein Luftfilter (3).

10. Kraftfahrzeug, **dadurch gekennzeichnet, dass** es die Vorrichtung nach einem der Ansprüche 1 bis 8 oder die Baueinheit nach Anspruch 9 umfasst.

## Claims

1. Battery support device (1) for a motor vehicle, comprising a support tray (10) intended to receive a battery (2), said tray (10) comprising a bottom (11) and at least one wall (121, 122) extending vertically from the bottom (11);
said device (1) being **characterized in that** it comprises:
- a channel (15) extending, in a horizontal direction, from a peripheral edge (111) of the bottom (11) and comprising a means (152) for fastening to an air filter (3); and
- a supporting part (16) housed in the channel (15) and fastened to said channel (15) on one side and to the at least one wall (121, 122) of the tray on the other side.

2. Device (1) according to Claim 1, **characterized in that** the fastening point for fastening the supporting part (16) to the channel (15) is situated in the vicinity of the means (152) for fastening to the air filter (3).

3. Device (1) according to Claim 1 or Claim 2, **characterized in that** the supporting part (16) comprises a reinforcement (13) disposed in the vicinity of the means (152) for fastening to the air filter (3).

4. Device (1) according to one of the preceding claims, **characterized in that** the channel (15) is formed integrally with the support tray (10).

5. Device (1) according to one of Claims 1 to 3, **characterized in that**:
- a first wall (121) extends vertically from a first peripheral edge (111) of the bottom (11);
- the channel (16) likewise extends, in the horizontal direction, from said first peripheral edge (111);
- the supporting part (16) comprises an external wall (163) and an internal wall (164) delimiting a space (E) that receives said first wall (121) so as to fasten said supporting part (16) to said first wall (121).

6. Device (1) according to Claim 5, **characterized in that**:
- the first wall (121) comprises a concave portion (121a) arranged so as to leave a screw well (7) uncovered;
- the external wall (163) and the internal wall (164) of the supporting part (16) each comprise a corresponding concave portion (163a, 164a) situated next to the concave portion (121a) of the first wall (121).

7. Device (1) according to one of the preceding claims, **characterized in that**:
- a first wall (121) extends vertically from a first peripheral edge (111) of the bottom (11);
- the channel (15) likewise extends, in the horizontal direction, from said first peripheral edge (111);
- the supporting part (16) is fastened to a second wall (122) intersecting said first wall (121).

8. Device (1) according to Claim 7, **characterized in that** the supporting part (16) is fastened to the second wall (122) by being screwed thereto.

9. Assembly for fastening and arranging a battery in a motor vehicle compartment, comprising:
- a device (1) according to one of the preceding claims;
- a battery (2); and
- an air filter (3).

10. Motor vehicle, **characterized in that** it comprises the device according to one of Claims 1 to 8 or the assembly according to Claim 9.
